# EUROPÄISCHE PATENTSCHRIFT

(11) **EP 4 076 790 B1**
(45) Veröffentlichungstag und Bekanntmachung des Hinweises auf die Patenterteilung: **11.10.2023**
(21) Anmeldenummer: 20824474.9
(22) Anmeldetag: 08.12.2020
(51) Int. Cl.: B22F 1/00, B22F 9/08, B22F 10/16, B33Y 10/00, B33Y 80/00, C22C 1/04, C22C 29/00, C22C 32/00, B22F 10/18, B22F 3/15, B22F 3/04, B22F 3/10, B22F 1/148

(54) **VERFAHREN ZUR HERSTELLUNG EINES BAUTEILS AUS EINEM ALUMINIUMMATERIAL SOWIE PULVER FÜR DIESE HERSTELLUNG**
METHOD FOR PRODUCING A COMPONENT FROM AN ALUMINUM MATERIAL AND POWDER FOR SAID PRODUCTION
PROCÉDÉ DE PRODUCTION D'UN COMPOSANT À PARTIR D'UN MATÉRIAU À BASE D'ALUMINIUM ET POUDRE POUR LA PRODUCTION DE CELUI-CI

(30) Priorität: 17.12.2019 DE 102019134748
(43) Veröffentlichungstag der Anmeldung: 26.10.2022
(73) Patentinhaber: GRÄNGES POWDER METALLURGY GMBH, 42553 Velbert (DE)
(72) Erfinder: BOUIKIDOU, Elisabeth, 42551 Velbert (DE); HACKLÄNDER, Stefan, 45257 Essen (DE); KÜRTEN, Benjamin, 40764 Langenfeld (DE); FAUSTEN, Bernd, 42549 Velbert (DE); WEISS, Holger, 40219 Düsseldorf (DE); COMMANDEUR, Bernd, 42489 Wülfrath (DE)
(74) Vertreter: Buse, Mentzel, Ludewig Patentanwaltskanzlei
(86) Internationale Anmeldenummer: PCT/EP2020/085030
(87) Internationale Veröffentlichungsnummer: WO 2021/122144

(56) Entgegenhaltungen:
- EP-A1- 0 622 476
- EP-B1- 0 622 476
- DE-A1-102011 120 540
- DE-B3-102014 002 583
- US-A- 5 372 775
- US-A1- 2019 210 163

## Beschreibung

Die Erfindung betrifft ein Verfahren zur Herstellung eines Bauteils aus einem Aluminiummaterial mit hoher Warmfestigkeit.

Bauteile aus Werkstoffen mit hoher Warmfestigkeit sind bekannt. Um ökologische Anforderungen zu erfüllen, wird jedoch gewünscht, dass diese Bauteile leicht sind und dennoch beste mechanische und physikalische Eigenschaften besitzen. Bei einem bekanntem Verfahren, dem Sprühkompaktieren, lassen sich Bolzen aus einer hochlegierten Aluminiumlegierung erzeugen, welche in nachfolgenden Umformschritten zu Buchsen geformt werden. Es ist darüber hinaus bekannt, bei diesem Prozess auch einen Bolzen aus einem Metallmatrixverbundwerkstoff zu erzeugen, in dem Hartstoffe homogen verteilt vorliegen.

Beim weiteren Verfahren werden Hartstoffpartikel auf einen Leichtmetallhalbzeug aufgebracht und durch ein Sinterverfahren am Grundkörper gebunden.

Die vorgenannten Verfahren werden nicht für die Herstellung konstruktiv aufwendiger Bauteile angewandt, da die erzeugten Halbzeuge noch durch eine Vielzahl von Umformschritte zum endkonturnahen Bauteil verarbeitet werden müssen.

Es ist darüber hinaus bekannt, endkonturnahe Bauteile durch einen generativen Fertigungsprozess aus Metallpulver zu erzeugen. Beispielsweise werden Eisenpulver, Titanpulver oder auch Aluminiumpulver in laserbasierten 3D-Druckverfahren, wie dem Selektiv-Laser-Melting (SLM) oder dem Electron-Beam-Melting (EBM), eingesetzt. Die mechanisch technologischen Eigenschaften der mit Aluminiumpulver erzeugten Bauteile, beispielsweise deren E-Modul, deren Festigkeit bzw. Warmfestigkeit sind bisher nicht zufriedenstellend. Der Wärmeausdehnungs-koeffizient ist relativ hoch und die Wärmeleitfähigkeit gering. Die Eigenschaften dieser Bauteile sind vergleichbar mit Gussbauteilen. Diesbezüglich werden Verbesserungen gewünscht.

Aus dem Dokument US 5 372 775 A ist bekannt, ein Bauteil aus einem Aluminiummaterial mit hoher Warmfestigkeit herzustellen. Hierzu wird eine Aluminiumlegierungsschmelze mit Keramikpartikeln versetzt, welche dann dispergiert in der Schmelze vorliegen. Diese Dispersion wird dann verdüst. Der Anteil an Keramikpartikeln, welche der Schmelze zugesetzt werden können, ist jedoch sehr begrenzt.

Aufgabe der vorliegenden Erfindung ist es, ein Verfahren zur Herstellung eines endkonturnahen Bauteils aus einem Aluminiummaterial mit hoher Warmfestigkeit zur Verfügung zu stellen, wobei größere Anteile an Zusatzpartikeln verwendet werden können.

Diese Aufgabe wird mit einem Verfahren mit den Merkmalen des Anspruchs 1 gelöst. Vorteilhafte Ausführungen des Verfahrens beschreiben die Unteransprüche.

Das neue Verfahren umfasst das Erzeugen eines Pulvers, welches für einen generativen Fertigungsprozess geeignet ist. Um ein solches Pulver zu erhalten, wird eine geeignete Aluminiumlegierung eingesetzt, nämlich eine übereutektische oder hypereutektische Aluminiumlegierung mit hohen Siliziumanteilen, vorzugsweise mit Siliziumanteilen von größer als 20 Gew%, besonders bevorzugt mit Siliziumanteilen von mehr als 28 Gew%. Diese Aluminiumlegierung wird geschmolzen und die Schmelze wird in einem Sprühverfahren in einer Inertgasatmosphäre, beispielsweise Stickstoff, verdüst. Bei diesem Versprühen der Aluminiumlegierungsschmelze werden gleichzeitig Zusatzpartikel hinzugefügt, d.h. in die Inertgasathmosphäre eingeführt. Bei diesen Zusatzpartikeln handelt es sich um Partikel einer Partikelgröße von bis 120 µm. Die Zusatzpartikel sind aus einem Material, welches in der Aluminiumlegierung nicht löslich ist. Beim Verdüsen der Aluminiumlegierungsschmelze entstehen Schmelzetröpfchen, die mit diesen Zusatzpartikel in Kontakt kommen. Beim Abkühlen der Schmelzetröpfchen verbinden sich die Zusatzpartikel mit dem Aluminiumlegierungsmaterial. Aufgrund der bei diesem Verfahrensschritt verwendeten sehr hohen Abkühlraten von 10³ bis 10⁵ K/s entstehen einerseits Pulverpartikel mit einem feinkörnigen Aluminiumlegierungsgefüge und andererseits bilden die im Sprühprozess zugeführten Zusatzpartikel zusammen mit der an deren Oberfläche anhaftenden Aluminiumlegierung nahezu kugelförmige Verbundpulverpartikel. Solche globularen Partikel sind gut für generative Verfahren geeignet. Bei dem schnellen Abkühlen der Aluminiumlegierungsschmelze wird der größte Teil der Zusatzpartikel partiell oder vollständig von der Aluminiumlegierung umschlossen und bildet Verbundpartikel. Zusatzpartikel, die nicht in Kontakt mit der Aluminiumlegierung kommen, können nachfolgend aufgrund ihrer Partikelgröße abgetrennt werden.

Die bei diesem Prozess erhaltenen erstarrten Pulverpartikel werden auf einer Auffangeinrichtung gesammelt und abtransportiert. Sie umfassen insbesondere Verbundpartikel, aber auch Aluminiumlegierungspartikel und unbeschichtete Zusatzpartikel. Die Partikelgrößen der erhaltenen Pulverpartikel variieren. Der größte Anteil liegt in einem Partikelbereich von 5 bis 300 µm. Für generative Verfahren sind enge Partikelgrößenbereiche von Vorteil, um beim schichtweisen Aufbau Inhomogenitäten zu vermeiden. Zu große Partikel benötigen eine hohe Aufschmelzzeit, was den Fertigungsprozess verlängert. Zudem können diese Partikel zu Kavitäten bzw. Poren im Werkstück führen. Deshalb werden ggf. zu große Pulverpartikel abgetrennt, insbesondere Pulverpartikel größer 350 µm. Sehr kleine Partikel sind nachteilig, da sie zu unerwünschten Wärmeentwicklungen während eines generativen Verfahrens führen. Sie werden nachfolgend ebenfalls abgetrennt. Bei den sehr kleinen Partikeln handelt es sich zum großen Teil um nicht-globulare, unbeschichtete Zusatzpartikel. Das Abtrennen zu großer bzw. zu kleiner Partikel erfolgt vorzugsweise mittels Sieben oder Windsichten. Die abgetrennten Partikel können in vorteilhafter Weise dem Sprühprozess wieder zugeführt werden.

Das nach dem Abtrennschritt erhaltene Pulver mit den kugelförmigen Verbundpartikeln wird bei einer Verfahrensvariante zur Herstellung eines endkonturnahen Bauteils einer generativen Fertigungseinrichtung zugeführt.

Bei einer weiteren Verfahrensvariante zur Herstellung eines endkonturnahen Bauteils durch eine generative Fertigung wird das Pulver mit den kugelförmigen Verbundpartikeln mit einem thermoplastischen Bindemittel gemischt, beispielsweise mit Polyethylen, mit Polymethylmethacrylat oder Polyester. Eine solche Mischung wird vorzugsweise zu einem filamentartigen Halbzeug extrudiert und in dieser Form der generativen Fertigung zugeführt.

Für Bauteile mit einer hohen Warmfestigkeit eignen sich insbesondere übereutektische oder hypereutektische Aluminiumlegierungen mit einem Siliziumanteil von mehr als 28 Gew%, mit einem Eisenanteil von 0,3 - 10 Gew%, mit einem Nickelanteil von 1 - 5 Gew%, mit einem Mangananteil bis 3 Gew%, mit einem Magnesiumanteil bis 1 Gew% und einem Rest an Aluminium. Beim Verdüsen einer Schmelze dieser Aluminiumlegierung und einem schnellen Abkühlen in einer Inertgasathmosphäre lassen sich hochlegierte Aluminiumlegierungspulverpartikel einer Partikelgröße von bis zu 200 µm, vorzugsweise von 30 bis 70 µm, erzeugen. Bei dem erfindungsgemäßen Verfahren werden beim Verdüsen Zusatzpartikel hinzugefügt, nämlich in einer Menge von 5 bis 70 Gew% bezogen auf den Aluminiumlegierungsanteil. Hierdurch werden je nach eingesetztem Gewichtsanteil neben den hochlegierten Aluminiumlegierungspulverpartikel auch oder insbesondere Verbundpartikeln erzeugt. Hierbei umfassen die Verbundpartikel Zusatzpartikel einer Größe von bis zu 120 µm, vorzugsweise bis 60 µm.

Bei den Zusatzpartikeln handelt es sich beispielsweise um Keramikpartikel zur Verbesserung der tribologischen Eigenschaften des entstehenden Bauteils. Als Keramikpartikel können Siliziumkarbidpartikel, Borkarbidpartikel, amorphe Borpartikel, Aluminiumoxidpartikel aber auch andere Keramikpartikel in einer Partikelgröße von 1 µm bis 120 µm beim Verdüsen eingesetzt werden. Keramikpartikel, die bei diesen Sprühverfahren nicht in Kontakt mit Aluminium kommen, haben vorzugsweise eine Partikelgröße bis 30 µm. Diese kleinen, nicht globularen Zusatzpartikel des entstehenden Pulvers werden aus dem aufgefangenen Pulver entfernt, beispielsweise über ein Siebverfahren oder mittels Windsichten.

Mit dem gleichen Verfahren lassen sich auch Pulver erzeugen, die in den globularen Verbundpulverpartikeln Farbpigmente enthalten. Hierfür werden beim Verdüsen Farbpigmentpartikel mit einer Partikelgröße von 5 bis 120 µm als Zusatzpartikel zugegeben. Dies sind insbesondere Oxide, Karbonate oder Silikate, aber auch metallische oder sonstige Pigmente, welche sich in der Aluminiumlegierung nicht lösen. Beispielsweise sind als Zusatzpartikel Partikel aus Titanrot, aus Eisenoxidrot, aus Chromoxidgrün, aus blauen oder grünen Kupferkarbonaten oder aus dem violetten Bariumkupfersilikat einsetzbar. Bei der generativen Fertigung wird aus einem solchen Pulver ein farbiges Bauteil erzeugt.

Bei einer weiteren Ausführung der Erfindung werden als Zusatzartikel Flussmittelpartikel bei der Erzeugung des Pulvers hinzugefügt, so entsteht ein Verbundpulver zum Hartlöten, wobei die Verbundpulverpartikel eine Aluminiumsiliziumlegierung als Lot und ein Flussmittel umfassen. Als Flussmittelpulverpartikel werden insbesondere Alkalimetallfluoride oder Alkalimetallfluormetallate zugefügt.

Das erzeugte Pulver umfasst insbesondere kugelförmige, sphärische bzw. globulare Verbundpulverpartikel, d.h. Zusatzpartikel, die partiell oder vollständig von der Aluminiumlegierung umschlossen sind. Darüber hinaus sind je nach dem eingesetztem Anteil an Zusatzpartikel auch Pulverpartikel aus der Aluminiumlegierung vorhanden. Alle Pulverpartikel liegen nach dem Sieben in einem Größenbereich von 100 bis 350 µm, vorzugsweise von 120 bis 250 µm vor. Diese Pulver sind gut für eine generative Fertigung geeignet und es lässt sich ein endkonturnahes Bauteil durch schichtweises Auftragen dieser Pulverpartikel, jeweils anschließendes selektives Aufschmelzen bestimmter Pulverpartikel jeder Schicht und nachfolgendes Abkühlen erzeugen. Das Aufschmelzen erfolgt nach einer Vorgabe bezüglich den gewünschten Maßen und einer gewünschten Form für das Bauteil, hierzu dienen entsprechende CAD-Daten. Der Energieeintrag zum Schmelzen wird beispielsweise über Laserstrahlen erzielt. Die kugelförmigen Verbundpartikel sind aufgrund ihrer Form gut für die generative Fertigung geeignet, da sie eine gute Rieselfähigkeit und Rakelfähigkeit aufweisen. Eine enge Kornfraktion hat dabei großen Einfluss auf die Qualität des generativ erzeugten Bauteils, da Inhomogenitäten im Pulverbett zu Bauteildefekten führen können. Bei der generativen Fertigung entsteht ein dreidimensionales Bauteil, beispielsweise ein Ring, eine Buchse oder auch eine wesentlich aufwendigere Konstruktion aus dem eingesetzten Pulver. In diesem Bauteil aus dem hochlegierten Aluminiummaterial liegen die Zusatzpartikel homogenen verteilt vor. Das erhaltene Bauteil zeichnet sich durch eine hohe Warmfestigkeit, einen E-Modul von bis zu 100 GPa und gute tribologische Eigenschaften aus und eignet sich beispielsweise für Anwendungen bei Einsatztemperaturen von bis zu 350°, wie z.B. als Kolben, Impeller oder Einlaßventile.

Bei einer weiteren Ausführung, außerhalb des Anwendungsbereichs der vorliegenden Erfindung, wird der generativen Fertigungseinrichtung zusätzlich auch ein Aluminiumlegierungspulver ohne Zusatzpartikel zugeführt wird, wobei dieses Aluminiumlegierungspulver eine Partikelgröße von 30 bis 70 µm besitzt und dass bei der generativen Fertigung Schichten aus den globularen Verbundpulverpartikeln, Schichten aus Aluminiumlegierungspulverpartikeln und/oder Schichten aus beiden Pulvern erzeugt werden, wobei ein Bauteil aus Aluminiummaterial entsteht, welches in tribologisch beanspruchten Bauteilbereichen Zusatzpartikel besitzt.

Für andere generative Verfahren, wie beispielsweise Fuse-Deposition-Modelling (FDM) oder Fused Filament Fabrication (FFF) werden filamentartige Ausgangsmaterialien benötigt. Hierzu wird das erzeugte und gesiebte Pulver mit einem thermoplastischen Bindemittel, wie beispielsweise Polymilchsäure, Polyethylen, Polymethylmethacrylat oder Polyester, gemischt und einer Extrusionseinrichtung zugeführt, wo ein filamentartiges Halbzeug aus der Pulver-Bindemittel-Mischung erhalten wird. Da die Zusatzpartikel als Verbundpartikel vorliegen, kommen sie nicht in direkten Kontakt mit der Extruderdüse, was den Verschleiß im Extruder verringert. Ein solches filamentartiges Halbzeug hat vorzugsweises einen Durchmesser von 1,5 bis 3 mm und wird nach dem Abkühlen auf eine Rolle aufgerollt. Mit diesem filamentartigen Halbzeug kann durch ein FDM-Verfahren ein endkonturnahes Bauteil aufgebaut werden. Das in dem filamentartigen Halbzeug enthaltene Bindemittel ist beispielsweise in einem Lösemittel wie Tetrahydrofuran löslich und wird mittels dieses Lösungsmittels nach der generativen Fertigung aus dem gefertigten Bauteil entfernt. Die Entfernung des Bindemittels kann auch auf thermischem Wege erfolgen. Gegebenenfalls kann nachfolgend ein Verdichtungsschritt, beispielsweise ein Sintern, zur Konsolidierung vorgenommen werden. Zur Steigerung des E-Moduls und der Verschleißbeständigkeit kann das Bauteil nach dem Entgasen, welches unter Temperaturbeaufschlagung erfolgt, einem heißisostatischen Pressen (HIP) oder kaltisostatischen Pressen (CIP) unterzogen werden.

In besonderer Weise wird bei diesem Verfahren zur Herstellung eines Bauteils aus Aluminiummaterial mit hoher Warmfestigkeit ein Pulver erzeugt, dass für die generative Fertigung geeignet ist. Dieses Pulver umfasst kugelförmige Pulverpartikel einer Partikelgröße bis 350 µm. Diese Pulverpartikel stellen Verbundpartikel aus einer übereutektischen oder hypereutektischen Aluminiumlegierung und Zusatzpartikeln (Keramikpartikel, Farbpigmentpartikel, Flussmittelpartikel) dar, welche von der Aluminiumlegierung partiell oder vollständig umschlossen sind. Durch die selektive Auswahl der Kornfraktion des erzeugten Pulvers kann ein speziell für den Anwendungszweck geeignetes Pulver erzeugt werden.

## Patentansprüche

1. Verfahren zur Herstellung eines Bauteils aus einem Aluminiummaterial mit hoher Warmfestigkeit und mit einem hohem E-Modul mit den Schritten
- Erzeugen eines Pulvers, welches globulare Verbundpulverpartikel umfasst, nämlich durch:
- Verdüsen einer Schmelze aus einer übereutektischen oder hypereutektischen Aluminiumlegierung in einer Inertgasathmosphäre unter Zugabe von in der Aluminiumlegierung nicht löslichen Zusatzpartikeln, wobei die Zusatzpartikel eine Partikelgröße von bis zu 120 µm besitzen,
- wobei beim Verdüsen 5 bis 70 Gew% an Zusatzpartikel bezogen auf das Gewicht der eingesetzten Aluminiumlegierungsschmelze zugeführt werden,
- Abkühlen der Schmelzetröpfchen bei hohen Abkühlraten von 10³ bis 10⁵ K/s und
- Auffangen der erstarrten Pulverpartikel auf einer Auffangeinrichtung, wobei die aufgefangenen Pulverpartikel globulare Verbundpulverpartikel umfassen, in welchen die Zusatzpartikel partiell oder vollständig von der Aluminiumlegierung umschlossen sind,
- Abtrennen von Pulverpartikeln aus dem Pulver, die eine minimale Partikelgröße von 100 µm nicht erreichen,
- ggf. Abtrennen von Pulverpartikeln aus dem Pulver, deren Partikelgröße 350 µm übersteigt,
- ggf. Mischen des Pulvers mit einem thermoplastischem Bindemittel,
- Zuführen des Pulvers oder der Pulver-Bindemittel-Mischung einer generativen Fertigungseinrichtung zur endkonturnahen Fertigung des Bauteils.

2. Verfahren nach Anspruch 1, **dadurch gekennzeichnet, dass** eine übereutektischen oder hypereutektischen Aluminiumlegierung
- mit einem Siliziumanteil von mehr als 28 Gew%,
- mit einem Eisenanteil von 0,3 bis 10 Gew%,
- mit einem Nickelanteil von 1 bis 5 Gew%,
- mit einem Mangananteil bis 3 Gew%,
- mit einem Magnesiumanteil bis 1 Gew% und
- einem Rest an Aluminium
zur Erzeugung des Pulvers eingesetzt wird.

3. Verfahren nach einem der Ansprüche 1 oder 2, **dadurch gekennzeichnet, dass** bei der generativen Fertigung des Bauteils ein schichtweises Auftragen von Pulver mit globularen Verbundpulverpartikeln, ein selektives Aufschmelzen von Pulverpartikeln je Schicht und Abkühlen der Schmelze erfolgt, wobei ein dreidimensionales Bauteil aufgebaut wird, welches aus Aluminiummaterial mit homogen verteilten Zusatzpartikel besteht.

4. Verfahren nach Anspruch 3, **dadurch gekennzeichnet, dass** der generativen Fertigungseinrichtung zusätzlich auch ein Aluminiumlegierungspulver ohne Zusatzpartikel zugeführt wird, wobei dieses Aluminiumlegierungspulver eine Partikelgröße von 30 bis 70 µm besitzt und dass bei der generativen Fertigung Schichten aus den globularen Verbundpulverpartikeln, Schichten aus Aluminiumlegierungspulverpartikeln und/oder Schichten aus beiden Pulvern erzeugt werden, wobei ein Bauteil aus Aluminiummaterial entsteht, welches in tribologisch beanspruchten Bauteilbereichen Zusatzpartikel besitzt.

5. Verfahren nach einem der Ansprüche 1 oder 2, **dadurch gekennzeichnet, dass** die Mischung aus dem Pulver mit den globularen Verbundpulverpartikeln und dem thermoplastischen Bindemittel in einer Extrusionseinrichtung zu einem filamentartigen Halbzeug mit einem Durchmesser von 1,5 bis 3 mm extrudiert wird und dass die Pulver-Bindemittel-Mischung in Form dieses filamentartigen Halbzeugs der generativen Fertigungseinrichtung zur Erzeugung eines endkonturnahen Bauteils zugeführt wird, vorzugsweise einer FDM-Einrichtung (Fused Deposition Modeling).

6. Verfahren nach Anspruch 5, **dadurch gekennzeichnet, dass** das Bindemittel Polymilchsäure in einem Lösemittel, wie Tetrahydrofuran, löslich ist und nach der generativen Fertigung des endkonturnahen Bauteils entfern wird.

7. Verfahren nach Anspruch 5 oder 6, **dadurch gekennzeichnet, dass** das endkonturnahe Bauteil einem Verdichtungsschritt unterzogen wird, vorzugsweise durch Sintern, HIP oder CIP.

## Claims

1. A method of manufacturing a component from an aluminium material having high high-temperature strength and a high modulus of elasticity, comprising the following steps:
- Producing a powder comprising globular composite powder particles, namely by:
- Atomization of a melt of a hyper-eutectic or hyper-eutectic aluminium alloy in an inert gas atmosphere with the addition of additive particles which are insoluble in the aluminium alloy, the additive particles having a particle size of up to 120 µm,
- Where 5 to 70% by weight of additional particles based on the weight of the aluminium alloy melt used are fed in during atomization,
- Cooling of the melt droplets at high cooling rates of 10³ to 10⁵ K/s and
- Collecting the solidified powder particles on a collection device, wherein the collected powder particles comprise globular composite powder particles in which the additive particles are partially or completely enclosed by the aluminium alloy,
- Separation of powder particles from the powder that do not reach a minimum particle size of 100 µm,
- If necessary, separation of powder particles from the powder, whose particle size exceeds 350 µm,
- If necessary, mixing of the powder with a thermoplastic binder,
- Feeding the powder or the powder-binder mixture to a generative manufacturing device for near-net-shape production of the component.

2. The method according to claim 1, **characterised in that** a hyper-eutectic or hyper-eutectic aluminium alloy
- with a silicon content of more than 28% by weight,
- with an iron content of 0.3 to 10% by weight,
- with a nickel content of 1 to 5% by weight,
- with a manganese content of up to 3% by weight,
- with a magnesium content of up to 1% by weight and
- a residue of aluminium
is used to produce the powder.

3. Method according to one of claims 1 or 2, **characterised in that** during the generative production of the component, powder with globular composite powder particles is applied layer by layer, powder particles are selectively melted per layer and the melt is cooled, whereby a three-dimensional component is built up which consists of aluminium material with homogeneously distributed additional particles.

4. The process according to claim 3, **characterised in that** an aluminium alloy powder without additional particles is additionally fed to the generative manufacturing device, this aluminium alloy powder having a particle size of 30 to 70 µm, and **in that** layers of the globular composite powder particles, layers of aluminium alloy powder particles and/or layers of both powders are produced during the generative manufacturing, a component of aluminium material being produced which has additional particles in tribologically stressed component regions.

5. Process according to one of claims 1 or 2, **characterised in that** the mixture of the powder with the globular composite powder particles and the thermoplastic binder is extruded in an extrusion device to form a filament-like semi-finished product with a diameter of 1.5 to 3 mm, and **in that** the powder-binder mixture in the form of this filament-like semi-finished product is fed to the generative manufacturing device for producing a near-net-shape component, preferably an FDM device (fused deposition modelling).

6. The process according to claim 5, **characterised in that** the poly-lactic acid binder is soluble in a solvent, such as Tetrahydrofuran (THF), and is removed after generative manufacturing of the near-net-shape component.

7. Process according to claim 5 or 6, **characterised in that** the near-net-shape component is subjected to a densification step, preferably by sintering, HIP or CIP.

## Revendications

1. Procédé de production d'un composant à partir d'un matériau à base d'aluminium offrant une haute résistance à la chaleur et un module d'élasticité élevé, comprenant les étapes suivantes :
- Fabrication d'une poudre comprenant des particules de poudre composites globulaires, à savoir :
- en pulvérisant avec une buse le contenu d'un bain - en alliage d'aluminium sureutectique ou hypereutectique - dans une atmosphère de gaz inerte, en ajoutant des particules d'appoint non solubles dans l'alliage d'aluminium, sachant que les particules d'appoint sont d'une taille pouvant atteindre 120 microns,
- sachant que lors de la pulvérisation sont ajoutés entre 5 et 70 % pondéraux de particules d'appoint référés au poids du bain d'alliage d'aluminium mis en oeuvre,
- en refioidissant les petites gouttes du bain à des vitesses de refroidissement élevées, comprises entre 10³ et 10⁵ K/s et
- en interceptant les particules de poudre solidifiées sur un dispositif d'interception, sachant que les particules de poudre interceptées comprennent des particules de poudre composites globulaires dans lesquelles les particules d'appoint sont partiellement ou entièrement enrobées par l'alliage d'aluminium,
- en séparant, de la poudre, les particules de poudre qui n'atteignent pas une taille minimale de 100 microns,
- le cas échéant en séparant, de la poudre, les particules de poudre qui dépassent une taille de 350 microns,
- le cas échéant en mélangeant la poudre avec un liant thermoplastique,
- en amenant la poudre ou le mélange poudre/liant à un dispositif de fabrication générative pour la fabrication du composant proche de son contour final.

2. Procédé selon la revendication 1, **caractérisé en ce qu'**est mis en œuvre un alliage d'aluminium sureutectique ou hypereutectique
- présentant une part de silicium supérieure à 28 % pondéraux,
- présentant une part de fer comprise entre 0,3 et 10 % pondéraux,
- présentant une part de nickel comprise entre 1 et 5 % pondéraux,
- présentant une part de manganèse atteignant 3 % pondéraux,
- présentant une part de magnésium atteignant 1 % pondéraux et
- présentant un reliquat d'aluminium
pour la fabrication d'une poudre.

3. Procédé selon l'une des revendications 1 ou 2, **caractérisé en ce que** lors de la fabrication générative du composant ont lieu une application couche par couche de poudre contenant des particules de poudre composites globulaires, une fusion sélective des particules de poudre composant chaque couche et un refroidissement du bain, sachant qu'est construit un composant tridimensionnel composé de matériau à base d'aluminium comprenant des particules d'appoint réparties de façon homogène.

4. Procédé selon la revendication 3, **caractérisé en ce qu'**au dispositif de fabrication générative est amenée en plus une poudre d'alliage à base d'aluminium sans particules d'appoint, sachant que la taille des particules constitutives de cette poudre d'alliage d'aluminium est comprise entre 30 et 70 microns et que lors de la fabrication générative sont générées des couches à partir des particules de poudre composites globulaires, des couches à partir de particules d'alliage d'aluminium en poudre et/ou des couches à partir des deux poudres, sachant que prend forme un composant en matériau à base d'aluminium possédant des particules d'appoint dans les zones du composant soumises à des contraintes tribologiques.

5. Procédé selon l'une des revendications 1 ou 2, **caractérisé en ce que** le mélange composé de la poudre avec les particules de poudre composites globulaires et du liant thermoplastique est extrudé dans un dispositif d'extrusion pour donner un produit semi-fini filamentaire d'un diamètre compris entre 1,5 et 3 mm, et **en ce que** le mélange poudre/liant ayant la forme de ce produit semi-fini filamentaire est amené au dispositif de fabrication générative, de préférence à un dispositif FDM (Fused Déposition Modeling), pour fabriquer un composant proche de ses contours finaux.

6. Procédé selon la revendication 5, **caractérisé en ce que** le liant - de l'acide polylactique - est soluble dans un solvant tel que le tétrahydrofurane, et qu'il est retiré après la fabrication générative du composant proche de ses contours finaux.

7. Procédé selon la revendication 5 ou 6, **caractérisé en ce que** le composant proche de ses contours finaux est soumis à une étape de densification, de préférence par frittage, HIP ou CIP.
